# EUROPÄISCHE PATENTSCHRIFT

(11) **EP 0 840 025 B1**
(45) Veröffentlichungstag und Bekanntmachung des Hinweises auf die Patenterteilung: **07.08.2002**
(21) Anmeldenummer: 97118707.5
(22) Anmeldetag: 28.10.1997
(51) Int. Cl.: F16C 32/06

(54) **Lageranordnung**
Supporting arrangement
Agencement de support

(30) Priorität: 30.10.1996 DE 19643919
(43) Veröffentlichungstag der Anmeldung: 06.05.1998
(73) Patentinhaber: Granit- und Schotterwerke Josef Kusser, 94529 Aicha v. W./Ndb. (DE)
(72) Erfinder: Kusser, Georg, 94529 Aicha v. Wald (DE); Kusser, Josef, 94529 Aicha v. Wald (DE)
(74) Vertreter: Marx, Lothar, Dr.

(56) Entgegenhaltungen:
- CH-A- 353 942
- DE-A- 3 802 561
- FR-A- 1 283 944
- US-A- 2 695 198
- US-A- 3 195 963
- US-A- 4 325 583
- PATENT ABSTRACTS OF JAPAN vol. 7, no. 163 (M-229), 16. Juli 1983 & JP 58 070956 A (SHIN NIPPON SEITETSU), 27. April 1983

## Beschreibung

Die Erfindung betrifft eine Lageranordnung mit einem Gegenstand in einer Haltevorrichtung der im Oberbegriff des Anspruchs 1 angegebenen Gattung,

Es ist bekannt, Kugeln mittels eines Wasserfilms so zu lagern, daß diese meist recht schwer wirkenden Kugeln mit geringem Kraftaufwand gedreht werden können. So wird z.B. in Carrara, Italien, seit mehreren Jahrzehnten eine sogenannte "schwimmende Kugel" gezeigt, welche auf einem solchen Wasserfilm gelagert ist und durch relativ geringe Kräfte, beispielsweise durch Anstoßen von Hand, gedreht werden kann. Eine solche Kugel wurde auch auf der IGA 1983 in München ausgestellt.

Eine Vorrichtung zur Lagerung und zum Antrieb einer solchen schwimmenden Kugel ist z.B. in der DE 38 02 561 beschrieben.

Es ist die Aufgabe der vorliegenden Erfindung, eine Lageranordnung vorzuschlagen, wobei der auf einem Flüssigkeitsfilm gelagerte Gegenstand drehbar sein soll und keine kugelförmige Gestalt aufweisen soll.

Diese Aufgabe wird durch eine Vorrichtung, welche die im Kennzeichnungteils der Anspruchs 1 aufgeführten Merkmale aufweist gelöst.

Die Unteransprüche sind auf zweckmäßige Ausführungsformen der Erfindung gerichtet.

Durch die erfindungsgemäße Abrundung des Randes an den zu den Seitenflächen des Gegenstandes angrenzenden Bereichen kann sich der scheibenförmige Gegenstand bei einer leichten Auslenkung wieder in die Ruhelage zurückbewegen. Hätte der Gegenstand scharfe Kanten, so würde dies zur Folge haben, daß sich der Gegenstand bei einer leichten Auslenkung verkantet und somit eine Rückstellung in die Ruhelage nicht mehr möglich ist.

In einer bevorzugten Ausführungsform ist die Flüssigkeit zur Lagerung der Scheibe Wasser, so daß die Scheibe auf einem dünnen Wasserfilm gelagert ist, also "schwimmt".

Bevorzugt weist die Scheibe eine in etwa horizontale Drehachse auf, welche in etwa mit der Symmetrieachse der Scheibe übereinstimmt.

Der Spalt, welcher durch die Scheibe und die Ausnehmung in der Haltevorrichtung, in welcher die Scheibe gelagert ist, gebildet wird, weist eine Breite auf, welche im Bereich von etwa 0,1 bis 2 mm, insbesondere bei ca. 0,2 mm, liegt. Die in diesem Spalt befindliche Flüssigkeit stellt den Flüssigkeitsfilm zur Lagerung der Scheibe dar.

Bei einer bevorzugten Ausführungsform sind etwa 10 bis 50 % des Durchmessers der Scheibe in der Ausnehmung der Haltevorrichtung angeordnet, d.h., daß in etwa 50 bis 90 % des Durchmessers der Scheibe nicht in der Ausnehmung der Haltevorrichtung sind. Besonders bevorzugt sind etwa 20 % der Scheibenhöhe in der Ausnehmung gelagert.

Es ist vorteilhaft, die Flüssigkeitszufuhr mittig in der Ausnehmung vorzusehen, da hierdurch das gleichmäßige Ausströmen der Flüssigkeit auf beiden Seiten des Gegenstandes unterstützt wird.

Vorteilhafterweise sind mindestens zwei Vorrichtungen zur Flüssigkeitszufuhr vorgesehen, so daß der Flüssigkeitsfilm zur Lagerung der Scheibe vorteilhafterweise von zwei separaten Zufuhren gespeist wird.

Bevorzugt werden die mindestens zwei Flüssigkeitszufuhren in einer Richtung senkrecht zur Drehrichtung der Scheibe nebeneinanderliegend angeordnet. Es kann dann z.B. über eine oder mehrere schräg angeordnete Düsen zur Zufuhr von Flüssigkeit ein Drehmoment der Scheibe erzeugt werden. Die Flüssigkeitszufuhren können auch Ventile aufweisen, so daß Flüssigkeit nur in Richtung der Scheibe fließen kann.

Vorteilhafterweise weisen die mindestens zwei Flüssigkeitszufuhren unabhängige Pumpen auf, wobei die Zufuhren so angeordnet sind, daß bei einer Schrägstellung der Scheibe eine Öffnung der beiden Zufuhren mehr geschlossen wird, als die andere, wodurch weniger Wasser durch diese Öffnung hindurchtreten kann. Dadurch wird an der Öffnung, welche mehr geschlossen ist, durch die unter dieser Öffnung angeordnete Pumpe ein erhöhter Druck erzeugt, welcher auf die Scheibe wirkt, so daß die leicht schräg stehende Scheibe durch diese von der Pumpe erzeugte Kraft in die Ruhelage zurückgeführt wird, so daß beide Zuführungen wieder die gleiche Öffnung aufweisen und ein Kräftegleichgewicht herrscht. Die Schrägstellung der Scheibe hat somit durch das ungleichmäßige Abdecken der Öffnungen der Zuführungen zur Folge, daß durch die Pumpe, welche die Flüssigkeit durch die weiter abgedeckte Öffnung zuführt, eine größere Kraft auf die Scheibe wirkt, als durch die Pumpe, welche Flüssigkeit durch die nicht soweit bzw. gar nicht abgedeckte Öffnung zuführt, so daß durch die Pumpe, welche Flüssigkeit durch die weiter abgedeckte Öffnung zuführt, eine Kraft auf die Scheibe wirkt, welche dazu führt, daß die leicht schrägstehende Scheibe in die Ruhelage zurückgedrückt wird.

Es ist möglich die Flüssigkeitszufuhr so anzuordnen, daß ein Drehmoment in der Scheibe erzeugt wird.

Bevorzugt liegen die Radien der abgerundeten Kanten der Scheibe in einem Bereich 5 bis 50 %, insbesondere 10 bis 35%, der Breite der Scheibe.

Die Seitenflächen der Scheibe können flach bzw. eben ausgebildet sein.

Bei einer anderen Ausführungsform der Erfindung kann die drehbar gelagerte Scheibe an den seitlichen Flächen auch leicht konisch ausgebildet sein, d.h. daß die die Scheibe an ihrer Symmetrie- und Drehachse die größte Dicke aufweist, welche sich zum Rand hin allmählich verringert.

Bevorzugt ist mit der Vorrichtung zur Zuführung der Flüssigkeit auch ein Reservoir unterhalb der drehbaren Scheibe ausgebildet, damit der Wasserstrom in der Ausnehmung gleichmäßig verteilt wird.

Bevorzugt weist der Flüssigkeitsfilm eine gewisse Strömung auf, welche so auf den beweglich gelagerten Gegenstand, d.h. die drehbare Scheibe, einwirkt, daß diese sich dreht, ohne daß eine Kraft zusätzlich von außen aufgewandt werden muß.

Die Erfindung wird anhand einer bevorzugten Ausführungsform unter Bezugnahme auf die nachstehenden Zeichnungen im einzelnen beschrieben. Es zeigen:
- Fig. 1: einen Schnitt durch die erfindungsgemäße Lageranordnung in vertikaler Richtung;
- Fig. 2: eine Vergrößerung der Lagerung der in Fig. 1 gezeigten Vorrichtung bei leichter Schrägstellung der Scheibe;
- Fig. 3: eine perspektivische Seitenansicht der erfindungsgemäßen Vorrichtung;
- Fig. 4: einen Schnitt durch die erfindungsgemäße Lageranordnung in vertikaler Richtung mit zwei separaten Zufuhren; und
- Fig. 5: eine Draufsicht auf die Anordnung nach Fig. 4.

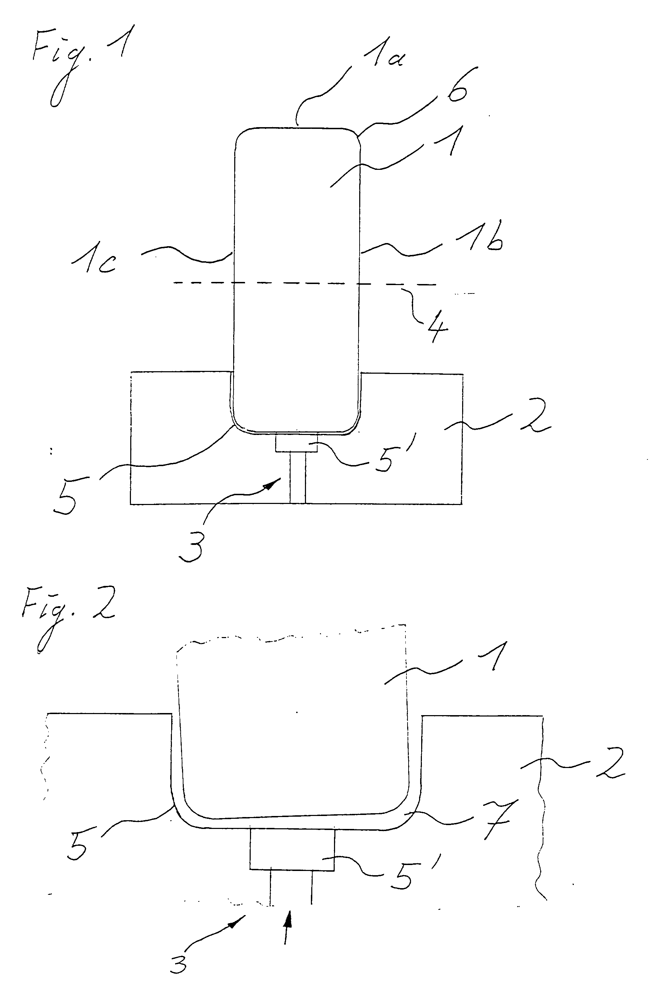

Wie aus Fig. 1 ersichtlich, ist eine Scheibe 1 in einer Haltevorrichtung 2 gelagert. Die Scheibe ist so angeordnet, daß deren Rotations- bzw. Symmetrieachse 4 in etwa horizontal liegt. Die Scheibe hat eine linke Seitenfläche 1c und eine rechte Seitenfläche 1b, welche im gezeigten Ausführungsbeispiel eben ausgebildet sind. Die umlaufende Fläche la der Scheibe 1 ist so ausgebildet, daß der Übergang von der umlaufenden Fläche la zu den Seitenflächen 1b bzw. 1c eine Krümmung 6 aufweist.

Die Haltevorrichtung 2 weist eine Ausnehmung 5 auf, die in etwa der Form der Scheibe 1 in Umlaufrichtung entspricht, so daß ein Spalt zwischen der Ausnehmung 5 und der Scheibe 1 ausgebildet werden kann, der in Ruhelage der Scheibe 1 ohne Wasserstrom an jeder Stelle eine in etwa gleiche Dicke aufweist.

In der Haltevorrichtung 2 sind mehrere Vorrichtungen zur Wasserzufuhr 3 in Umlaufrichtung der Scheibe 1 angeordnet, wobei in Fig. 1 nur eine davon gezeigt ist, so daß durch eine geeignete Anordnung der Wasserzufuhr ein Drehmoment der Scheibe 1 erzeugt werden kann. Im oberen Bereich der Wasserzufuhr 3 ist angrenzend an die Ausnehmung 5 ein Reservoir 5' ausgebildet.

Das Reservoir 5' ist bevorzugt länglich ausgebildet, so daß die Wasserzufuhr gleichmäßig in der Ausnehmung 5 verteilt wird.

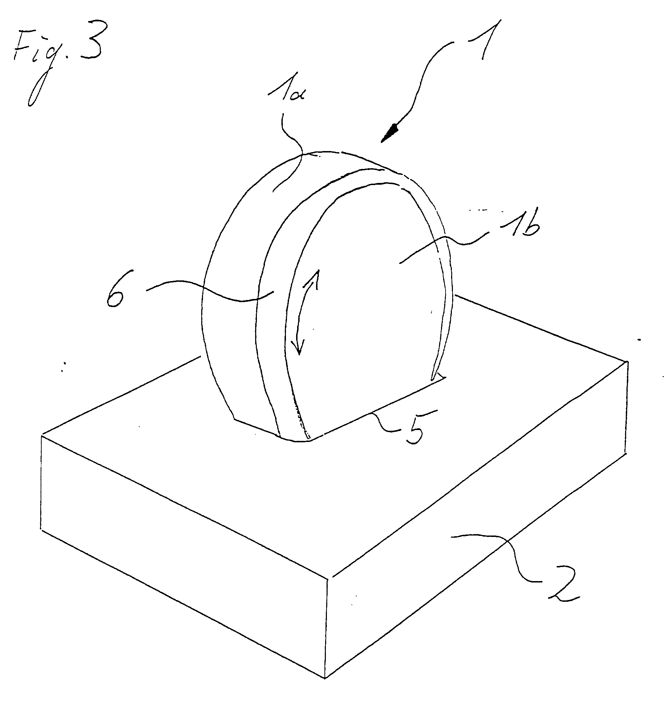

In Fig. 2 ist der untere Abschnitt der erfindungsgemäßen Lagerung nochmals mit einer leichten Schräglage der Scheibe 1 dargestellt. Eine solche, etwa durch äußere Einwirkungen entstandene Schräglage behebt sich bei der erfindungsgemäßen Ausgestaltung von selbst, d.h. die unten umströmte Scheibe richtet sich wieder in eine vertikale Lage auf.

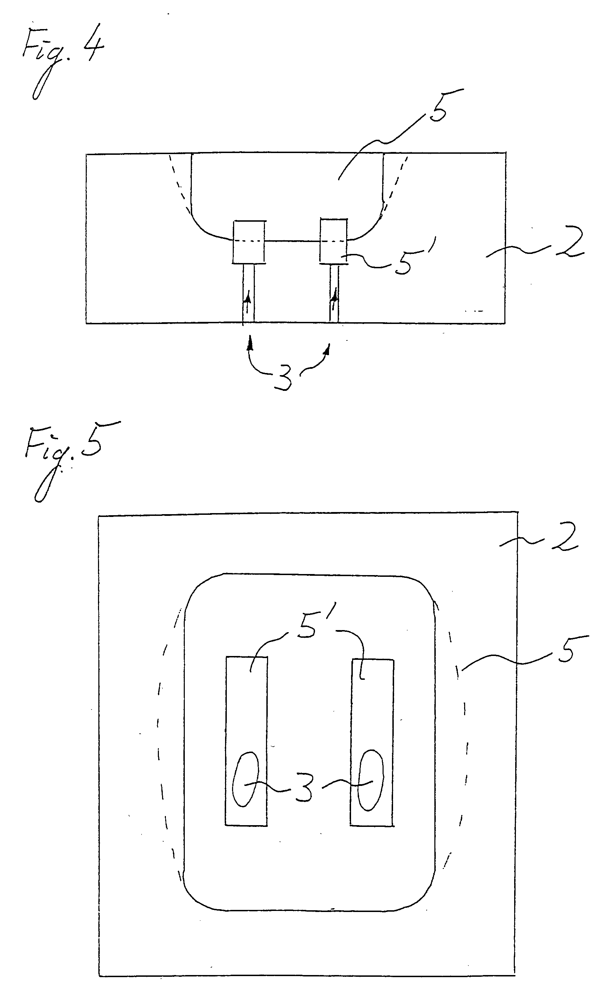

Fig. 3 zeigt die Scheibe 1, welche sich innerhalb der Ausnehmung 5 der Haltevorrichtung 2 in den mit dem Pfeil angedeuteten Richtungen bewegen kann.

Fig. 4 zeigt eine weitere Ausführungsform der Erfindung ohne eine in der Haltevorrichtung 2 liegende Scheibe 1. Dabei ist in der Haltevorrichtung 2 die Wasserzufuhr 3 so ausgebildet, daß zwei separate Wasserzufuhren vorgesehen sind, welche Wasser über das jeweilige Reservoir 5' zuführen. Die Ausnehmung 5 kann wie gezeigt ausgebildet sein. Sie kann jedoch auch, wie mit den unterbrochenen Linien angedeutet, eine sich nach oben weitende Öffnung darstellen, so daß der Bereich der Ausnehmung 5 mit dem kleinsten Querschnitt direkt über der Wasserzufuhr 3 liegt. Liegt nun eine Scheibe 1 in der Ausnehmung 5, so wirken bei der Lage der Scheibe 1 in einer senkrechten Stellung von beiden Zufuhren über die unter den Zufuhren angeordneten zwei separaten Pumpen jeweils die gleichen Kräfte auf die Scheibe 1, so daß die Scheibe in der senkrechten Lage bleibt.

Wird die Scheibe 1 jedoch aus der Ruhelage ausgelenkt, so daß sie sich in einer leichten Schrägstellung befindet, so wird eine Öffnung einer Wasserzufuhr 3 weiter abgedeckt, so daß nicht mehr soviel Wasser durch diese abgedeckte Öffnung hindurchströmen kann, wie durch die andere nicht abgedeckte Öffnung. Dies hat zur Folge, daß die unter dieser Öffnung liegende Pumpe einen höheren Druck verursacht, da der Wasserstrom durch diese Pumpe behindert wird. Durch diesen erhöhten Druck wirkt über das Wasser auf die leicht schräg liegende Scheibe 1 eine Kraft, welche der Auslenkung der Scheibe 1 entgegenwirkt, so daß die Scheibe 1 wieder in die Ruhelage zurückgedrückt wird.

Wie aus Figur 5 ersichtlich, muß die Wasserzufuhr 3 nicht mittig in dem Reservoir 5' angeordnet sein. Die Wasserzufuhr 3 kann eine leicht ovale Öffnung aufweisen, welche sich längs der Drehrichtung der Scheibe erstreckt. Die unterbrochenen Linien zeigen, wie in Figur 4, daß die Ausnehmung 5 nach oben hin eine zunehmende Öffnung aufweisen kann.

## Patentansprüche

1. Lageranordnung mit einem Gegenstand (1) in einer Haltevorrichtung, wobei
a) die Haltevorrichtung (2) eine den Gegenstand (1) aufnehmende Ausnehmung (5) aufweist;
b) die Haltevorrichtung (2) eine Vorrichtung (3) zur Wasserzufuhr im Bereich der Ausnehmung (5) aufweist; und
c) der Gegenstand (1) in der Haltevorrichtung (2) auf einem Wasserfilm drehbar gelagert ist,
**dadurch gekennzeichnet, dass**
d) der Gegenstand (1) im Wesentlichen scheibenförmig ist;
e) die umlaufende Umfangsfläche (1a) des Gegenstandes (1) in der Ausnehmung (5) gelagert ist; und
f) die umlaufende Umfangsfläche (1a) an den zu den Seitenflächen (1b, 1c) des Gegenstandes (1) angrenzenden Bereichen konvex abgerundet ist.

2. Lageranordnung nach Anspruch 1, **dadurch gekennzeichnet, dass** die Drehachse (4) des Gegenstandes (1) in etwa mit der Symmetrieachse des Gegenstandes (1) übereinstimmt und in etwa horizontal angeordnet ist.

3. Lageranordnung nach einem der vorhergehenden Ansprüche, **dadurch gekennzeichnet, dass** zwischen dem Gegenstand (1) und der Ausnehmung (5) ein Spalt ausgebildet werden kann, in welchem sich das zugeführte Wasser befindet, wobei die Spaltbreite vorzugsweise 0,1 bis 2 mm, insbesondere 0,2 mm beträgt.

4. Lageranordnung nach einem der vorhergehenden Ansprüche, **dadurch gekennzeichnet, dass** 10 bis 50 %, insbesondere 20 %, des Durchmessers des Gegenstandes (1) in der Ausnehmung (5) der Haltevorrichtung (2) angeordnet sind.

5. Lageranordnung nach einem der vorhergehenden Ansprüche, **dadurch gekennzeichnet, dass** die Vorrichtung zur Wasserzufuhr (3) mittig in der Ausnehmung (5) vorgesehen ist.

6. Lageranordnung nach einem der vorhergehenden Ansprüche, **dadurch gekennzeichnet, dass** die Vorrichtung zur Wasserzufuhr (3) in der Haltevorrichtung (2) mindestens zwei Zufuhren aufweist, welche insbesondere in einer Richtung senkrecht zur Drehrichtung des Gegenstandes (1) nebeneinander liegend angeordnet sind, wobei die Vorrichtung zur Wasserzufuhr (3) vorzugsweise mindestens zwei Pumpen, insbesondere eine Pumpe je Zufuhr, aufweist.

7. Lageranordnung nach einem der vorhergehenden Ansprüche, **dadurch gekennzeichnet, dass** die Vorrichtung zur Wasserzufuhr (3) so angeordnet ist, dass sie ein Drehmoment des Gegenstandes (1) erzeugen kann.

8. Lageranordnung nach einem vorhergehenden Ansprüche, **dadurch gekennzeichnet, dass** die Radien der Krümmung (6) zwischen der umlaufenden Umfangsfläche (1a) und den Seitenflächen (1b, 1c) des Gegenstandes (1) in einem Bereich von 5 bis 50 %, insbesondere 10 bis 35 % der Breite des Gegenstandes (1) liegen.

9. Lageranordnung nach einem der Ansprüche 1 bis 8, **dadurch gekennzeichnet, dass** die Seitenflächen (1b, 1c) des Gegenstandes (1) eben ausgebildet sind.

10. Lageranordnung nach einem der Ansprüche 1 bis 8, **dadurch gekennzeichnet, dass** die Seitenflächen (1b, 1c) des Gegenstandes (1) so ausgebildet sind, dass sie im Bereich der Symmetrieachse (4) des Gegenstandes (1) die größte Dicke aufweisen, welche sich in Richtung auf den umlaufenden Rand (1a) allmählich verringert.

11. Lageranordnung nach einem der vorhergehenden Ansprüche, **dadurch gekennzeichnet, dass** ein Reservoir (5') oberhalb der Wasserzufuhr (3) in der Haltevorrichtung (2) angeordnet ist.

## Claims

1. A supporting arrangement comprising an object (1) in a holding device, wherein:
a) said holding device (2) comprises a recess (5) which receives said object (1);
b) said holding device (2) comprises a device (3) for supplying water in the region of said recess (5); and
c) said object (1) is rotatably supported on a film of water in said holding device (2).
**characterised in that**:
d) said object (1) is substantially disk-shaped;
e) the peripheral edge (1a) of said object (1) is supported in said recess (5); and
f) said surrounding peripheral edge (1a) is rounded in the regions adjoining the side areas (1b, 1c) of said object (1).

2. The supporting arrangement as set forth in claim 1, **characterised in that** the axis of rotation (4) of said object (1) is approximately coincident with the axis of symmetry of said object (1), and arranged approximately horizontally.

3. The supporting arrangement as set forth in claim 1, **characterised in that** between said object (1) and said recess (5), a gap may be configured in which the supplied liquid is situated, wherein the width of said gap is preferably 0.1 to 2 mm, in particular 0.2 mm.

4. The supporting arrangement as set forth in any one of the preceding claims, **characterised in that** 10 to 50%, in particular 20%, of the diameter of said object (1) is arranged in said recess (5) of said holding device (2).

5. The supporting arrangement as set forth in any one of the preceding claims, **characterised in that** said device (3) for supplying water is provided centrally in said recess (5).

6. The supporting arrangement as set forth in any one of the preceding claims, **characterised in that** said device (3) for supplying water in said holding device (2) comprises at least two supplies, which in particular are arranged juxtaposed in a direction perpendicular to the direction of rotation of said object (1), wherein said device (3) for supplying water preferably comprises at least two pumps, in particular one pump per supply.

7. The supporting arrangement as set forth in any one of the preceding claims, **characterised in that** that said device (3) for supplying water is arranged such that it can generate a torque in said object (1).

8. The supporting arrangement as set forth in any one of the preceding claims, **characterised in that** the radii of curvature (6) between said peripheral edge (1a) and said side area (1b, 1c) of said object (1) are in a range of 5 to 50%, in particular 10 to 35%, of the width of said object (1).

9. The supporting arrangement as set forth in any one of claims 1 to 8, **characterised in that** said side areas (1b, 1c) of said object (1) are configured flat.

10. The supporting arrangement as set forth in any one of claims 1 to 8, **characterised in that** said side areas (1b, 1c) of said object (1) are configured such that they exhibit maximum thickness in the region of said axis of symmetry (4) of said object (1), which gradually diminishes in the direction of said peripheral edge (1a).

11. The supporting arrangement as set forth in any one of the preceding claims, **characterised in that** a reservoir (5') is arranged above said water supply (3) in said holding device (2).

## Revendications

1. Agencement de support avec un objet (1) dans un dispositif de maintien, dans lequel
a) le dispositif de maintien (2) présente un évidement (5) qui reçoit l'objet (1) ;
b) le dispositif de maintien (2) comporte un dispositif (3) pour l'arrivée d'eau dans la zone de l'évidement (5) ; et
c) l'objet (1) est monté de manière à pouvoir tourner dans le dispositif de maintien (2) sur un film d'eau,
**caractérisé en ce que**
d) l'objet (1) est sensiblement en forme de disque ;
e) la surface périphérique (1a) tournante de l'objet (1) est montée dans l'évidement (5) ; et
f) la surface périphérique (1a) tournante est arrondie de manière convexe dans les zones adjacentes aux surfaces latérales (1b, 1c) de l'objet (1).

2. Agencement de support selon la revendication 1, **caractérisé en ce que** l'axe de rotation (4) de l'objet (1) coïncide approximativement avec l'axe de symétrie de l'objet (1) et est disposé à peu près horizontalement.

3. Agencement de support selon l'une des revendications précédentes, **caractérisé en ce qu'**il peut être formé, entre l'objet (1) et l'évidement (5), une fente dans laquelle se trouve le liquide amené, la largeur de la fente étant de préférence comprise entre 0,1 et 2 mm, en particulier de 0,2 mm.

4. Agencement de support selon l'une des revendications précédentes, **caractérisé en ce que** 10 à 50 %, en particulier 20 % du diamètre de l'objet (1) sont disposés dans l'évidement (5) du dispositif de maintien (2).

5. Agencement de support selon l'une des revendications précédentes, **caractérisé en ce que** le dispositif d'amenée d'eau (3) est prévu au milieu de l'évidement (5).

6. Agencement de support selon l'une des revendications précédentes, **caractérisé en ce que** le dispositif d'amenée d'eau (3) présente dans le dispositif de maintien (2) au moins deux arrivées qui sont disposées horizontalement et côte à côte, en particulier dans une direction perpendiculaire au sens de rotation de l'objet (1), le dispositif d'amenée d'eau (3) comportant de préférence au moins deux pompes, en particulier une pompe par arrivée.

7. Agencement de support selon l'une des revendications précédentes, **caractérisé en ce que** le dispositif d'amenée d'eau (3) est disposé de manière qu'il puisse engendrer un couple de rotation de l'objet (1).

8. Agencement de support selon l'une des revendications précédentes, **caractérisé en ce que** les rayons de la courbure (6) entre la surface périphérique (1a) tournante et les surfaces latérales (1b, 1c) de l'objet (1) se situent dans une plage de 5 à 50 %, en particulier de 10 à 35 % de la largeur de l'objet (1).

9. Agencement de support selon l'une des revendications 1 à 8, **caractérisé en ce que** les surfaces (1b, 1c) de l'objet (1) sont planes.

10. Agencement de support selon l'une des revendications 1 à 8, **caractérisé en ce que** les surfaces latérales (1b, 1c) de l'objet (1) sont telles qu'elles présentent, dans la zone de l'axe de symétrie (4) de l'objet (1), la plus grande épaisseur qui diminue progressivement en direction du bord périphérique (1a).

11. Agencement de support selon l'une des revendications précédentes, **caractérisé en ce qu'**un réservoir (5') est disposé au-dessus de l'arrivée d'eau (3) dans le dispositif de maintien (2).
